# EUROPÄISCHE PATENTSCHRIFT

(11) **EP 1 928 714 B1**
(45) Veröffentlichungstag und Bekanntmachung des Hinweises auf die Patenterteilung: **23.01.2013**
(21) Anmeldenummer: 06778123.7
(22) Anmeldetag: 02.08.2006
(51) Int. Cl.: B60T 8/36, F16K 31/06

(54) **MAGNETVENTIL**
MAGNETIC VALVE
ELECTROVANNE

(30) Priorität: 19.09.2005 DE 102005044672
(43) Veröffentlichungstag der Anmeldung: 11.06.2008
(73) Patentinhaber: ROBERT BOSCH GMBH, 70442 Stuttgart (DE)
(72) Erfinder: KRATZER, Dietmar, 71732 Tamm (DE)
(86) Internationale Anmeldenummer: PCT/EP2006/064970
(87) Internationale Veröffentlichungsnummer: WO 2007/033855

(56) Entgegenhaltungen:
- EP-A2- 1 227 021
- WO-A-00/74988
- WO-A-01/14776
- WO-A-01/30626
- WO-A-99/50117
- WO-A-2004/055420

## Beschreibung

### Stand der Technik

Die Erfindung geht aus von einem Magnetventil nach der Gattung des unabhängigen Patentanspruchs 1.

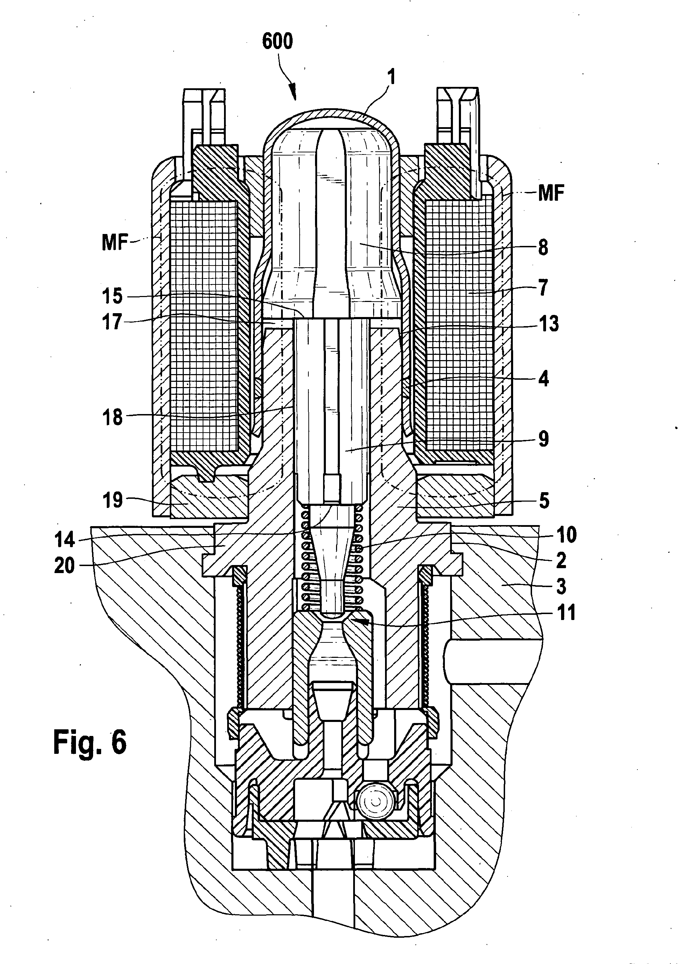

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 6 dargestellt. Wie aus Figur 6 ersichtlich ist, umfasst das herkömmliche Magnetventil 600 eine Magnetbaugruppe 7 mit einer Abdeckscheibe 19, eine Ventilpatrone, welche eine Kapsel 1, einen Ventileinsatz 5, einen Stößel 9, eine Rückstellfeder 10 und einen Anker 8 umfasst. Bei der Herstellung des Magnetventils 600 werden die Kapsel 1 und der Ventileinsatz 5 der Ventilpatrone durch Pressen aufeinander gefügt und durch eine Dichtschweißung 4 wird die Ventilpatrone hydraulisch gegenüber der Atmosphäre abgedichtet. Zusätzlich nimmt der Ventileinsatz 5 die im hydraulischen System auftretenden Druckkräfte auf und leitet diese über einen Verstemmflansch 20 an einem Verstemmbereich 2 auf einen Fluidblock 3 weiter. Zudem leitet der Ventileinsatz 5 einen von der gefügten Magnetbaugruppe 7 eingeleiteten Magnetfluss axial über einen Luftspalt 17 in Richtung Anker 8. Außerdem nimmt der Ventileinsatz 5 den so genannten Ventilkörper auf, welcher den Ventilsitz 11 bildet, in welchen der Stößel 9 dichtend eintaucht, um die Dichtfunktion des Magnetventils 600 umzusetzen. Wie weiter aus Figur 6 ersichtlich ist, werden der Stößel 9 über eine Stößelführung 18 und die Rückstellfeder 10 im Ventileinsatz 5 geführt. Die untere Anbindung der Magnetbaugruppe 7 geschieht durch direktes Aufpressen der Abdeckscheibe 19 auf den magnetisch leitenden Ventileinsatz 5 der Ventilpatrone. Die ebenfalls auf den Ventileinsatz 5 gepresste und verschweißte Kapsel 1 weist einen unteren Bereich auf, welcher überlappend auf den Ventileinsatz 5 geschoben ist. Zum Aufpressen wird die Kapsel 1 über eine vorgelagerte Einführschräge 13 auf den Ventileinsatz 5 geschoben. Zum Aufpressen der Magnetgruppe 7 auf den Ventileinsatz 5 ist eine zweite Einführschräge vorgesehen.

In der Offenlegungsschrift WO 01/14776 A1 wird beispielsweise ein Magnetventil beschrieben, welches an einem Verstemmbereich mit einem Fluidblock verstemmt ist. Das Magnetventil umfasst eine Kapsel, eine Magnetbaugruppe, einem Anker und einem Ventileinsatz, welcher einen von der Magnetbaugruppe eingeleiteten Magnetfluss axial über einen Luftspalt in Richtung Anker leitet, wobei die Kapsel einen unteren Bereich aufweist, welcher überlappend auf den Ventileinsatz geschoben ist, wobei der Überlappungsbereich der Kapsel in Richtung Verstemmbereich verlängert ist und die Magnetbaugruppe den Magnetfluss über die Kapsel in den Ventileinsatz einleitet, wobei eine Hülse in die Kapsel eingefügt ist, und wobei die Bewegung eines Stößels vom Ventileinsatz und/oder von der Hülse über eine zugehörige Stößelführung geführt ist. Somit besteht das Ventilgehäuse besteht der, im Tiefziehverfahren hergestellten Kapsel und der in die Kapsel teleskopartig einfügbaren Hülse, welche an dem von der Kapsel abgewandten Ende vorzugsweise einen metallischen Dichtsitz mit einem Ventilaufnahmekörper bildet. Zudem ist die Kapsel in Richtung auf den Ventilaufnahmekörper zu einem Haltekragen ausgeformt, wobei die Kapsel in dem teleskopartigen Überdeckungsbereich mit der Hülse eine unlösbare, vorzugsweise mittels Laserschweißung hergestellte Verbindung aufweist.

In der Offenlegungsschrift EP 1 227 021 A2 wird eine mehrteilige Filterkombination für ein fluidführendes Bauteil beschrieben. Die beschriebene Filterkombination ist wie ein hydraulischer Teil eines Magnetventils in eine abgestufte Bohrung eines Ventilblocks gefügt. Der hydraulische Teil des Magnetventils weist eine Ventilhülse auf, welche mit einem durch einen Polkern verschlossenen Ankerführungsrohr mittels einer Schweißung dicht verbunden ist. Zur Befestigung des hydraulischen Teils im Ventilblock ist ein Haltering vorgesehen.

In der Offenlegungsschrift WO 99/50117 wird ein Elektromagnetventil in Patronenbauweise beschrieben. Im beschriebenen Elektromagnetventil bilden Magnetkern, Magnetanker mit Ventilschließglied und Ventilsitzkörper in einem Ventilgehäuse eine funktionsfähige Einheit, wobei das Ventilgehäuse einen geschlossenen Hülsenabschnitt aufweist, der am entgegengesetzten offenen Endbereich zur Befestigung im Ventilgehäuse einen Kragen aufweist. In den offenen Endbereich des Hülsenabschnitts ist ein hülsenförmiges Ringteil teleskopartig eingefügt, das den Ventilsitzkörper trägt und diesen konzentrisch gegenüber dem Ventilschließglied zu einer funktionsfähigen Einheit ausrichtet. Zudem ist der Hülsenabschnitt mittels einer Schweißnaht mit dem Ringteil unlösbar verbunden.

In der Offenlegungsschrift WO 01/30626 A1 wir ein Elektromagnetventil mit einem in einem Ventilgehäuse geführten Ventilstößel beschrieben, der ein Ventilschließglied aufweist. Weiter umfasst das beschriebene Elektromagnetventil einen dem Ventilschließglied zugewandten Ventilsitzaufnahmekörper, der mit dem Ventilgehäuse und dem Ventilstößel eine eigenständig handhabbare erste Unterbaugruppe bildet, eine Filterbaugruppe sowie einen den Ventilstößel betätigenden Magnetanker, der mittels einer am Ventilgehäuse angeordneten Ventilspule elektromagnetisch betätigbar ist. Die Ventilhülse und der Ventilaufnahmekörper sind mittels einer Schweißverbindung dauerhaft befestigt.

### Vorteile der Erfindung

Das erfindungsgemäße Magnetventil mit den Merkmalen des unabhängigen Patentanspruchs 1 hat demgegenüber den Vorteil, dass ein Überlappungsbereich einer Kapsel in Richtung Verstemmbereich verlängert ist, eine Magnetbaugruppe einen Magnetfluss über die Kapsel in einen Ventileinsatz einleitet, die Kapsel mit einer Ventilbuchse am Verstemmbereich mit einem Fluidblock verstemmt ist und eine Hülse in die Kapsel eingefügt ist. Dadurch kann in vorteilhafter Weise eine starke Vereinfachung der einzelnen Komponenten erreicht werden. Durch die Verlängerung der Kapsel in den Fluidblock, erfolgt die Abdichtung gegenüber der Atmosphäre und die Verstemmung mit dem Fluidblock in vorteilhafter Weise über die Ventilbuchse und nicht mehr über den Ventileinsatz. Dadurch kann auf einen Herstellungsschritt zum Dichtschweißen der Kapsel auf den Ventileinsatz verzichtet werden. Durch den Entfall der Schweißnaht und einer Fügeschräge zum Aufpressen der Kapsel auf den Ventileinsatz ergibt sich außerdem eine verringerte Bauhöhe des Magnetventils über dem Fluidblock, was sich positiv auf ein Aggregatgehäusevolumen auswirken kann, in welches der Fluidblock mit dem Magnetventil integriert werden kann. Durch die Hülsenbauweise im Ventilunterteil ergibt sich in vorteilhafter Weise auch im Fluidblock eine verringerte Bauhöhe, wodurch die Dicke des Fluidblocks verringert und somit auch das Gewicht und das Volumen des Fluidblocks in vorteilhafter Weise reduziert werden kann.

Erfindungsgemäβ Bewegung eines Stößels des Magnetventils vom Ventileinsatz und/oder von der Hülse über eine zugehörige Stößelführung geführt ist.

Erfingdungsgemäß kann der Hub des Stößels in vorteilhafter Weise durch ein axiales Verschieben der Kapsel und/oder der Hülse ineinander eingestellt werden. Der Luftspalt zwischen dem Ventileinsatz und dem Anker kann durch Verschieben des Ventileinsatzes in der Kapsel mit eingelegtem Anker verändert werden. Zudem kann die Hülse eine Ausströmbohrung umfassen.

Durch die in den abhängigen Ansprüchen aufgeführten Maßnahmen und Weiterbildungen sind vorteilhafte Verbesserungen des im unabhängigen Patentanspruch angegebenen Magnetventils möglich.

Die Stößelführung durch die Hülse weist den Vorteil auf, dass kein Versatz von Führung zu Dichtsitz wegen der Montage von zwei Bauteilen erzeugt wird. Der Ventileinsatz kann dann eine einfache Ringform aufweisen und nur noch den von der Magnetbaugruppe eingeleiteten Magnetfluss über den Luftspalt zum Anker leiten. Wird der Stößel durch den Ventileinsatz geführt, dann kann der Ventileineinsatz eine runde Innenbohrung aufweisen und im Stößel können zwischen einer Stößeloberseite und einer Stößelunterseite Volumenausgleichsnuten eingebracht werden. Bei einer alternativen Ausführungsform kann der Stößel vollrund ausgeführt werden und im Ventileinsatz können zwischen der Stößeloberseite und der Stößelunterseite Volumenausgleichsnuten eingebracht werden.

In Ausgestaltung des erfindungsgemäßen Magnetventils kann sich eine Rückstellfeder für den Stößel gegen die Hülse oder den Ventileinsatz abstützen. Bei einer Anordnung der Rückstellfeder zwischen dem Anker und dem Ventileinsatz in der Nähe des Luftspalts und einer Abstützung gegen den Ventileinsatz, kann in vorteilhafter Weise die Strömungsführung im Ventilsitzbereich verbessert werden, da die Rückstellfeder nicht mehr den Strömungskräften durch die Fluidströmung in der Nähe des Dichtsitzes ausgesetzt ist.

### Zeichnung

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. Es zeigen:
- Figur 1: eine schematische Schnittdarstellung einer ersten Ausführungsform eines erfindungsgemäßen Magnetventils,
- Figur 2: eine schematische Schnittdarstellung einer zweiten Ausführungsform eines erfindungsgemäßen Magnetventils,
- Figur 3: eine schematische Querschnittdarstellung entlang einer Linie A-A aus Figur 2 zur Darstellung einer ersten Variante einer Stößelführung,
- Figur 4: eine schematische Querschnittdarstellung entlang einer Linie A-A aus Figur 2 zur Darstellung einer zweiten Variante einer Stößelführung,
- Figur 5: eine schematische Schnittdarstellung einer dritten Ausführungsform eines erfindungsgemäßen Magnetventils, und
- Figur 6: eine schematische Schnittdarstellung eines herkömmlichen Magnetventils.

### Beschreibung

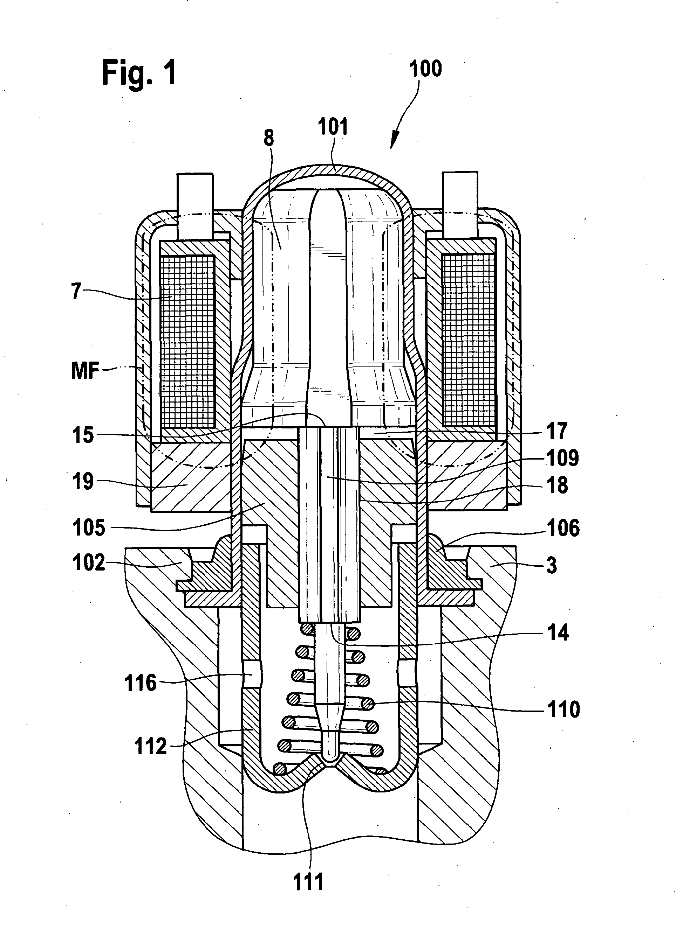

Wie aus Figur 1 ersichtlich ist, umfasst eine erste Ausführungsform eines erfindungsgemäßen Magnetventils 100, welches an einem Verstemmbereich 102 über eine Ventilbuchse 106 mit einem Fluidblock 3 verstemmt ist, eine Magnetbaugruppe 7 mit einer Abdeckscheibe 19 und eine Ventilpatrone, welche eine Kapsel 101, eine Hülse 112, einen Ventileinsatz 105, einen über eine Stößelführung 18 vom Ventileinsatz 105 geführten Stößel 109, eine Rückstellfeder 110, welche sich gegen die Hülse 112 abstützt, und einen Anker 8 umfasst. Die Kapsel 101 weist einen unteren Bereich auf, welcher überlappend auf den Ventileinsatz 105 geschoben ist. Die Kapsel 101 der Ventilpatrone ist als zur Atmosphäre hin dichtendes Ventilbauteil ausgeführt und im Vergleich zu dem in Figur 6 dargestellten herkömmlichen Magnetventil 600 ist der Überlappungsbereich der Kapsel 101 in Richtung des Verstemmbereichs 102 mit dem Fluidblock 3 verlängert. Dadurch kann die herkömmliche Dichtschweißung 4 aus Fig. 6 entfallen. Die Fluidkräfte und die Verstemmkräfte werden nicht mehr vom Ventileinsatz 105, sondern von der Ventilbuchse 106 aufgenommen. In der Kapsel 101 wirkt der gegenüber dem herkömmlichen Magnetventil 600 aus Figur 6 unveränderte Anker 8 und setzt den in der Funktion unveränderten Stößel 109 gegen die Rückstellfeder 110 in Bewegung. Der untere Teil der Ventilpatrone und ein Dichtsitz 111 werden von der Hülse 112 mit Ausströmbohrung 116 gebildet, welche in die Kapsel 101 gefügt ist. Die Abdichtung der beiden Ventilseiten kann durch einen Kunststoffeinsatz oder durch Dichteinpressen in einen Sitz im Fluidblock 3 erfolgen. Der Hub des Stößels 109 kann durch axiales Verschieben der Kapsel 101 und der Hülse 112 ineinander eingestellt werden. Ein von der Magnetbaugruppe 7 über eine Wandung des Überlappungsbereichs der Kapsel 101 in den Ventileinsatz 105 eingeleiteter Magnetfluss MF, wird vom Ventileinsatz 105 axial über einen Luftspalt 17 in Richtung Anker 8 geleitet. Der Luftspalt 17 zwischen dem Ventileinsatz 105 und dem Anker 8 kann durch Verschieben des Ventileinsatzes 105 in der Kapsel 101 mit eingelegtem Anker 8 verändert werden. Durch den Entfall der Dichtschweißnaht 4 und einer Fügeschräge 13 weist die erste Ausführungsform des erfindungsgemäßen Magnetventils 100 gegenüber dem herkömmlichen Magnetventil 600 gemäß Figur 6 eine verringerte Bauhöhe über dem Fluidblock auf, was sich positiv auf das Aggregatgehäusevolumen auswirkt, in welches der Fluidblock mit Magnetventil integriert ist. Zudem kann der Unterteil des Magnetventils 100 durch die Hülsenbauweise ebenfalls mit einer verringerten Bauhöhe innerhalb des Fluidblocks 3 ausgeführt werden. Dadurch ist es möglich die Dicke des Fluidblocks 3 zu reduzieren und in vorteilhafter Weise auch das Gewicht und das Volumen des Fluidblocks 3 zu verringern.

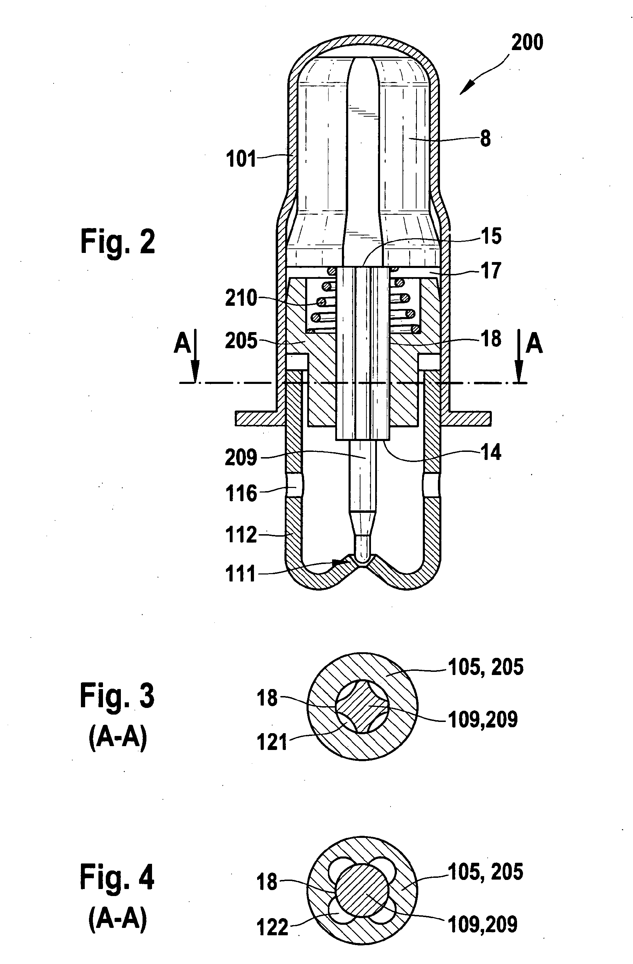

Eine zweite Ausführungsform eines erfindungsgemäßen Magnetventils 200 gemäß Figur 2 ist analog zur ersten Ausführungsform des erfindungsgemäßen Magnetventils 100 gemäß Figur 1 ausgeführt und an einem Verstemmbereich über eine Ventilbuchse mit einem Fluidblock verstemmt. Zur Beschreibung der Unterschiede zwischen der ersten und zweiten Ausführungsform des erfindungsgemäßen Magnetventils 100, 200, sind in Figur 2 nur die aus der Kapsel 101 und der Hülse 112 gefügte Ventilpatrone und die zugehörigen Komponenten dargestellt. Der wesentliche Unterschied zwischen der ersten und zweiten Ausführungsform des erfindungsgemäßen Magnetventils 100, 200 besteht darin, dass bei der zweiten Ausführungsform des Magnetventils 200, die Rückstellfeder 210 für den Stößel 209 in die Nähe des Luftspaltes 17 zwischen dem Anker 8 und dem Ventileinsatz 205 eingesetzt ist. Zudem stützt sich die Rückstellfeder nicht gegen die Hülse 112, sondern gegen den Ventileinsatz 205 ab. Dadurch ist die Rückstellfeder 210 nicht mehr den Strömungskräften durch die Fluidströmung in der Nähe des Dichtsitzes 111 ausgesetzt, wodurch die Strömungseigenschaften verbessert werden. Analog zur ersten Ausführungsform des erfindungsgemäßen Magnetventils 100 gemäß Figur 1, ist auch bei der zweiten Ausführungsform des erfindungsgemäßen Magnetventils 200 gemäß Figur 2, der Überlappungsbereich der Kapsel 101 in Richtung des Verstemmbereichs mit dem Fluidblock verlängert, wodurch der vom Ventileinsatz 205 axial über den Luftspalt 17 in Richtung Anker 8 geleitete Magnetfluss MF von der Magnetbaugruppe über die Wandung des Überlappungsbereichs der Kapsel 101 in den Ventileinsatz 205 eingeleitetet wird. Zudem werden die Bewegung des Stößels 209 gegen die Rückstellfeder 210 auch bei der zweiten Ausführungsform des erfindungsgemäßen Magnetventils 200 durch den Ventileinsatz 205 über die Stößelführung 18 geführt. Die zweite Ausführungsform des erfindungsgemäßen Magnetventils 200 weist die gleichen Vorteile bezüglich der verringerten Bauhöhe wie die erste Ausführungsform des erfindungsgemäßen Magnetventils 100 auf.

Figur 3 und 4 zeigen jeweils eine schematische Querschnittdarstellung entlang einer Linie A-A aus Figur 2 zur Darstellung der Stößelführung 18 durch die Ventileinsätze 105, 205. In den Figuren 3 und 4 sind lediglich die Querschnitte durch die Stößel 109, 209 und die Ventileinsätze 105, 205 dargestellt. Wie aus Figur 1 und 2 ersichtlich ist, wird bei der ersten und zweiten Ausführungsform des erfindungsgemäßen Magnetventils 100, 200 die Bewegung des Stößels 109, 209 vom Ventileinsatz 105, 205 über eine zugehörige Stößelführung 18 geführt. Wie aus Figur 3 ersichtlich ist, können die Ventileinsätze 105, 205 gemäß dem ersten Ausführungsbeispiel der Stößelführung 18 eine runde Innenbohrung aufweisen und in den Stößeln 109, 209 können zwischen einer Stößeloberseite 15 und einer Stößelunterseite 14 Volumenausgleichsnuten 121 eingebracht sein. Wie aus Figur 4 ersichtlich ist, können bei der Stößelführung 18 gemäß dem zweiten Ausführungsbeispiel die Stößel 109, 209 vollrund ausgeführt sein und die Volumenausgleichsnuten 122 zwischen der Stößeloberseite 15 und der Stößelunterseite 14 können in den Ventileinsatz 105, 205 eingebracht sein.

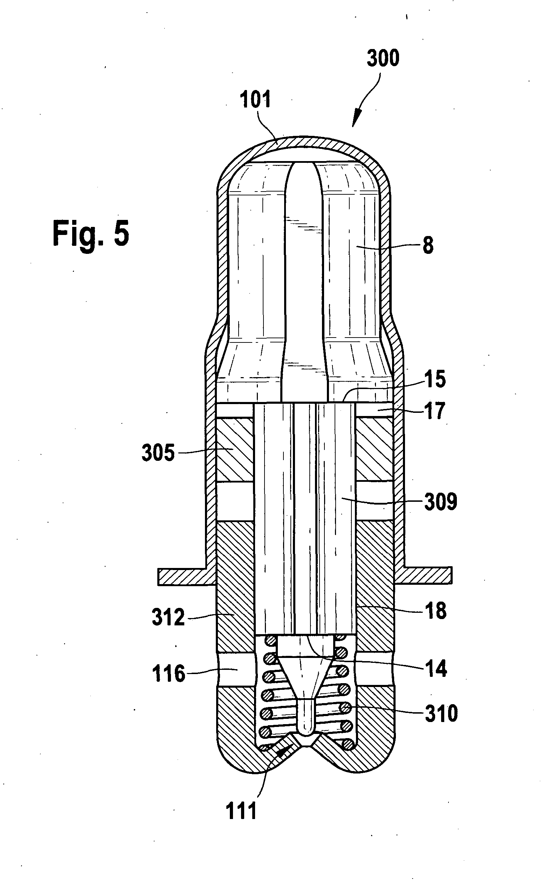

Eine dritte Ausführungsform eines erfindungsgemäßen Magnetventils 300 gemäß Figur 5 ist analog zur ersten Ausführungsform des erfindungsgemäßen Magnetventils 100 gemäß Figur 1 ausgeführt und an einem Verstemmbereich über eine Ventilbuchse mit einem Fluidblock verstemmt. Zur Beschreibung der Unterschiede zwischen der dritten Ausführungsform des erfindungsgemäßen Magnetventils 300 und der ersten Ausführungsform des erfindungsgemäßen Magnetventils 100 sind in Figur 5 ebenfalls nur die aus der Kapsel 101 und der Hülse 312 gefügte Ventilpatrone und die zugehörigen Komponenten dargestellt. Der wesentliche Unterschied zwischen der dritten Ausführungsform des erfindungsgemäßen Magnetventils 300 und der ersten Ausführungsform des erfindungsgemäßen Magnetventils 100 besteht darin, dass bei der dritten Ausführungsform des Magnetventils 300 die Hülse 312 die Stößelführung 18 des Stößels 309 übernimmt und der Ventileinsatz 305 eine einfache Ringform aufweist. Der Ventileinsatz 305 hat nur noch die Aufgabe, den von der Magnetbaugruppe über eine Wandung des Überlappungsbereichs der Kapsel 101 eingeleiteten Magnetfluss MF axial über den Luftspalt 17 in Richtung Anker 8 zu leiten. Analog zur ersten Ausführungsform des erfindungsgemäßen Magnetventils 100 gemäß Figur 1, ist auch bei der dritten Ausführungsform des erfindungsgemäßen Magnetventils 300 gemäß Figur 3, der Überlappungsbereich der Kapsel 101 in Richtung des Verstemmbereichs mit dem Fluidblock verlängert. Zudem stützt sich die Rückstellfeder 310 gegen die Hülse 312 ab. Bei einer alternativen nicht dargestellten Ausführungsform kann die Rückstellfeder für den Stößel 309 analog zur zweiten Ausführungsform des erfindungsgemäßen Magnetventils 200 in der Nähe des Luftspaltes 17 zwischen dem Anker 8 und dem Ventileinsatz 305 eingesetzt werden, so dass sich die Rückstellfeder nicht gegen die Hülse 312, sondern gegen den Ventileinsatz 305 abstützt. Die dritte Ausführungsform des erfindungsgemäßen Magnetventils 300 weist die gleichen Vorteile bezüglich der verringerten Bauhöhe wie die erste und zweite Ausführungsform des erfindungsgemäßen Magnetventils 100, 200 auf.

Das erfindungsgemäße Magnetventil umfasst eine in Richtung der Verstemmung mit dem Fluidblock verlängerte Kapsel, welche mit einer eingefügten Hülse als zur Atmosphäre hin dichtendes Ventilbauteil ausgeführt ist, und eine Ventilbuchse, welche die Fluidkräfte und die Verstemmkräfte aufnimmt und an den Fluidblock weiterleitet. Dadurch kann die Bauhöhe des Magnetventils im Vergleich zu herkömmlichen Magnetventilen verringert werden.

Das erfindungsgemäße Magnetventil kann beispielsweise als stromlos geöffnetes oder stromlos geschlossenes 2/2-Ventil ausgeführt sein und vorzugsweise in Hydraulikaggregaten eingesetzt werden, welche Teil eines Antiblockiersystems (ABS) oder eines Antriebsschlupfregelsystems (ASR-System) oder eines elektronischen Stabilitätsprogrammsystems (ESP-System) sind.

## Patentansprüche

1. Magnetventil, welches an einem Verstemmbereich (102) mit einem Fluidblock (3) verstemmt ist, mit einer Kapsel (101), einer Magnetbaugruppe (7), einem Anker (8) und einem Ventileinsatz (105, 205, 305), welcher einen von der Magnetbaugruppe (7) eingeleiteten Magnetfluss (MF) axial über einen Luftspalt (17) in Richtung Anker (8) leitet, wobei die Kapsel (101) einen unteren Bereich aufweist, welcher überlappend auf den Ventileinsatz (105, 205, 305) geschoben ist, wobei der Überlappungsbereich der Kapsel (101) in Richtung Verstemmbereich (102) verlängert ist und die Magnetbaugruppe (7) den Magnetfluss (MF) über die Kapsel (101) in den Ventileinsatz (105, 205, 305) einleitet, wobei eine einen Dichtsitz (111) aufweisende Hülse (112, 312) in die Kapsel (101) eingefügt ist, und wobei die Bewegung eines Stößels (109, 209, 309) vom Ventileinsatz (105, 205) und/oder von der Hülse (312) über eine zugehörige Stößelführung (18) geführt ist, **dadurch gekennzeichnet, dass** die Kapsel (101) mit einer Ventilbuchse (106) am Verstemmbereich (102) mit dem Fluidblock (3) verstemmt ist, wobei der Hub des Stößels (109, 209, 309, 409) durch axiales Verschieben der Kapsel (101) und/oder der Hülse (112, 312) einstellbar ist, und der Luftspalt (17) zwischen dem Ventileinsatz (105, 205, 305) und dem Anker (8) durch Verschieben des Ventileinsatzes (105, 205, 305) in der Kapsel (101) mit eingelegtem Anker (8) veränderbar ist.

2. Magnetventil nach Anspruch 1, **dadurch gekennzeichnet, dass** der Ventileinsatz (105, 205) zur Stößelführung (18) eine runde Innenbohrung aufweist und im Stößel (109, 209) zwischen einer Stößeloberseite (15) und einer Stößelunterseite (14) Volumenausgleichsnuten (121) eingebracht sind.

3. Magnetventil nach Anspruch 1, **dadurch gekennzeichnet, dass** der Stößel (109, 209) vollrund ausgeführt ist und im Ventileinsatz (105, 205) zur Stößelführung (18) zwischen einer Stößeloberseite (15) und einer Stößelunterseite (14) Volumenausgleichsnuten (122) eingebracht sind.

4. Magnetventil nach einem der Ansprüche 1 bis 3, **gekennzeichnet durch** eine Rückstellfeder (110, 210, 310), welche sich gegen die Hülse (112, 312) oder den Ventileinsatz (205) abstützt und den Stößel (109, 209, 309) zurückstellt.

5. Magnetventil nach Anspruch 4, **dadurch gekennzeichnet, dass** die Rückstellfeder (210), in der Nähe des Luftspalts (17) zwischen dem Anker (8) und dem Ventileinsatz (205) angeordnet ist.

6. Magnetventil nach einem der Ansprüche 1 bis 5, **dadurch gekennzeichnet, dass** die Hülse (112, 312) eine Ausströmbohrung (116) umfasst.

## Claims

1. Magnetic valve, which is caulked with a fluid block (3) at a caulking region (102), with a capsule (101), with a magnetic subassembly (7), with an armature (8) and with a valve insert (105, 205, 305) which conducts a magnetic flux (MF), introduced by the magnetic subassembly (7), axially in the direction of the armature (8) via an air gap (17), the capsule (101) having a lower region which is pushed in an overlapping manner onto the valve insert (105, 205, 305), the overlap region of the capsule (101) being prolonged in the direction of the caulking region (102), and the magnetic subassembly (7) introducing the magnetic flux (MF) into the valve insert (105, 205, 305) via the capsule (101), a sleeve (112, 312) which has a sealing seat (111) being inserted into the capsule (101), and a movement of a tappet (109, 209, 309) being guided by the valve insert (105, 205) and/or by the sleeve (312) via an associated tappet guide (18), **characterized in that** the capsule (101) is caulked with the fluid block (3) at the caulking region (102) by means of a valve bush (106), the stroke of the tappet (109, 209, 309, 409) being adjustable by means of the axial displacement of the capsule (101) and/or of the sleeve (112, 312), and the air gap (17) between the valve insert (105, 205, 305) and the armature (8) being variable by means of the displacement of the valve insert (105, 205, 305) in the capsule (101), with the armature (8) introduced.

2. Magnetic valve according to Claim 1, **characterized in that** the valve insert (105, 205) has, for tappet guidance (18), a round inner bore, and volume compensation grooves (121) are introduced in the tappet (109, 209) between a tappet top side (15) and a tappet underside (14).

3. Magnetic valve according to Claim 1, **characterized in that** the tappet (109, 209) is a fully round form, and volume compensation grooves (122) are introduced in the valve insert (105, 205), for tappet guidance (18), between a tappet top side (15) and a tappet underside (14).

4. Magnetic valve according to one of Claims 1 to 3, **characterized by** a restoring spring (110, 210, 310) which is supported against the sleeve (112, 312) or the valve insert (205) and which restores the tappet (109, 209, 309).

5. Magnetic valve according to Claim 4, **characterized in that** the restoring spring (210) is arranged in the vicinity of the air gap (17) between the armature (8) and the valve insert (205).

6. Magnetic valve according to one of Claims 1 to 5, **characterized in that** the sleeve (112, 312) comprises an outflow bore (116).

## Revendications

1. Électrovanne, laquelle est matée à une zone de matage (102) avec un bloc de fluide (3), comprenant une capsule (101), un sous-ensemble magnétique (7), un induit (8) et un insert de vanne (105, 205, 305), lequel conduit un flux magnétique (MF) induit par le sous-ensemble magnétique (7) dans le sens axial en direction de l'induit (8) par le biais d'un entrefer (17), la capsule (101) présentant une zone inférieure qui est glissée de manière chevauchante sur l'insert de vanne (105, 205, 305), la zone de chevauchement de la capsule (101) étant prolongée en direction de la zone de matage (102) et le sous-ensemble magnétique (7) induisant le flux magnétique (MF) dans l'insert de vanne (105, 205, 305) par le biais de la capsule (101), une douille (112, 312) présentant un siège d'étanchéité (111) étant introduite dans la capsule (101) et le mouvement d'un coulisseau (109, 209, 309) étant guidé par l'insert de vanne (105, 205) et/ou par la douille (312) par le biais d'un guide de coulisseau (18) associé, caractérisée en ce la capsule (101) est matée avec une douille de vanne (106) à la zone de matage (102) avec le bloc de fluide (3), la course du coulisseau (109, 209, 309, 409) étant réglable par un décalage axial de la capsule (101) et/ou de la douille (112, 312), et l'entrefer (17) entre l'insert de vanne (105, 205, 305) et l'induit (8) étant modifiable en décalant l'insert de vanne (105, 205, 305) dans la capsule (101) avec l'induit (8) introduit.

2. Électrovanne selon la revendication 1, **caractérisée en ce que** l'insert de vanne (105, 205) présente pour le guidage du coulisseau (18) un alésage interne rond et des rainures de compensation du volume (121) sont aménagées dans le coulisseau (109, 209) entre un côté supérieur de coulisseau (15) et un côté inférieur de coulisseau (14).

3. Électrovanne selon la revendication 1, **caractérisée en ce que** le coulisseau (109, 209) est réalisé entièrement rond et des rainures de compensation du volume (122) sont aménagées dans l'insert de vanne (105, 205) pour le guidage du coulisseau (18) entre un côté supérieur de coulisseau (15) et un côté inférieur de coulisseau (14).

4. Électrovanne selon l'une des revendications 1 à 3, **caractérisée par** un ressort de rappel (110, 210, 310) qui s'appuie contre la douille (112, 312) ou l'insert de vanne (205) et qui ramène le coulisseau (109, 209, 309) en arrière.

5. Électrovanne selon la revendication 4, **caractérisée en ce que** le ressort de rappel (210) est disposé à proximité de l'entrefer (17) entre l'induit (8) et l'insert de vanne (205).

6. Électrovanne selon l'une des revendications 1 à 5, **caractérisée en ce que** la douille (112, 312) comprend un orifice de sortie d'écoulement (116).
